# EUROPEAN PATENT SPECIFICATION

(11) **EP 0 680 404 B1**
(45) Date of publication and mention of the grant of the patent: **29.03.2000**
(21) Application number: 94900675.3
(22) Date of filing: 24.11.1993
(51) Int. Cl.: B30B 11/02, B22F 3/02

(54) **UNDERCUT SPLIT DIE**
HINTERSCHNITTENE MEHRTEILIGE PRESSFORM
FILIERE DOUBLE POUR PIECE A CONTRE-DEPOUILLE

(43) Date of publication of application: 08.11.1995
(73) Proprietor: STACKPOLE LIMITED, Mississauga, Ontario L5J 1K7 (CA)
(72) Inventor: HINZMANN, Gerd, Mississauga, Ontario L5J 1K7 (CA); HAIKO, Mark, Mississauga, Ontario L5J 1K7 (CA); MA, Frank, Mississauga, Ontario L5J 1K7 (CA); WILSON, Allan, Mississauga, Ontario L5J 1K7 (CA); BUCKLEY-GOLDER, Keith, Mississauga, Ontario L5J 1K7 (CA); ROUND, Robert, Mississauga, Ontario L5J 1K7 (CA)
(74) Representative: Barnfather, Karl Jon, Dr.
(86) International application number: PCT/CA93/00505
(87) International publication number: WO 95/14567

(56) References cited:
- US-A- 3 020 589
- US-A- 3 752 622
- US-A- 3 773 446
- US-A- 3 891 367

## Description

### FIELD OF INVENTION

This invention relates to dies and particularly split dies for producing compacted parts out of powder material having an undercut, and more specifically relates to a device having an upper die, lower die, at least one upper punch associated with the upper die, and at least two lower punches associated with the lower die for producing compacted parts out of powder material having an undercut.

### Background of the Invention

Devices to compact parts out of powder material for sintering are well known to those persons skilled in the art. In some cases, the compacted part has an undercut which prevents removal of the part or blank from the dies by linear or axial displacement.

Tool sets with split dies are known in powder material compaction to press parts into shapes that have an undercut in the compacting direction.

For example, United States Patent No. 3,773,446 teaches a device for moulding parts to be sintered by compressing powdered material held between a fixed die and moveable die. A pair of punches extending through the dies compresses the powder material. A pressure plate operated by the punch extending through the moveable die engages the moveable die and is also locked to the fixed die during the compression so as produce a part having an undercut.

Moreover, United States Patent No. 3,752,622 teaches a device for moulding blanks with undercut parts to be sintered by compaction of powder material.

The prior art teaches that both parts of the die are tied together while filling with a feed box that moves across the top of the dies for purpose of filling the cavity with powdered material. After compaction the upper part of the die moves away together with the top punch to eject the part.

One of the disadvantages of the known systems as referred to above relates to the fact that the upper part of the die has to be tied mechanically to the lower part of the die and the upper punch in an alternating mode, thus making a complicated tool rig necessary.

It is therefore an object of this invention to provide a device that is simpler to construct and more efficient to operate than theretofore known by the prior art.

It is another object of this invention to provide a tool system with a split die where both parts of the die remain tied to one part of the rig during the entire cycle.

It is an aspect of this invention to provide a toolset for compacting parts from powdered material comprising a pair of opposed die and punch sets each having a die and a punch cooperating therewith to define respective cavities; the die and punch sets being movable relative to one another from an open position in which the sets are separated to a closed position in which the cavities are in close communication to form a closed mould chamber, in which the respective cavity has a volume sufficient to receive a charge of powder to fill the mould chamber, to a transfer position and which the respective cavity has a reduced volume; movement of the punch between filling and transfer positions thereby transferring powder to the other of the cavities to fill the closed chamber; the dies and punches of the pair of die and punch sets being further movable to a compaction position and an ejection position.

Preferably at least one of the pair of die and punch sets has a plurality of punches nested within a die; each of the plurality of punches having an end for contacting the charge of powder and each of the ends being moveable to contact the powder material at different levels to produce the compacted part having different level.

Preferably the other of the pair of die and punch sets includes more than one punch, the one of the pair of die and punch sets includes more than two punches, and each of the punches are moveable to respective space locations in the lower chamber to form a multi level compacted part.

Preferably in each of the filling, transfer, compaction, and ejection positions each of the punches is in sliding engagement within the die with which it is cooperating.

It is a further aspect of the invention to provide a press for compacting parts out of powder material, the press having a frame, a pair of opposed rams and a toolset operatively associated with the rams, the press comprising: a pair of die and punch sets moveable relative to one another between an open position, a closed position, and an ejection position; a drive for controlling relative movement between the punch and die sets; each of the punch and die sets including at least one punch associated with a die for relative movement there between; a drive member associated with each of the sets for controlling relative movement between respective ones of the die and the punch; the punch and die of one of the sets defining a cavity for filling with the powder material when the die sets are in the open position; the drive member associated with the one set being in the closed position to move the punch of the one set towards the die of the other of the sets so as to transfer the powder material toward the die of the other set, the drive members being operable to cause relative movement of the punches to compact the powder material between the punches with the dies in the closed position so as to produce the compacted part; and the die sets being moveable to the eject position for ejection of the compacted part.

Preferably one of the punches of one of the sets is mounted to one of the rams, and wherein the drive member associated therewith comprises a hydraulic motor operable between the one ram and the die, the one set for movement of the die relative to the punch.

Preferably the die of the other of the sets is mounted to the other of the rams.

It is a further aspect of the invention to provide a method for making powder parts according to claim 18

### Drawings of the Invention

These and other objects and features of the invention shall now be described in relation to the following drawings.
Figure 1 is a representative view of the device showing the upper and lower dies and upper and lower punches.
Figure 2 is a representative view of the device showing the compacted part having different levels on the lower surface.
Figure 3 is a schematic view of another embodiment of the invention showing the various two upper and three lower punches.

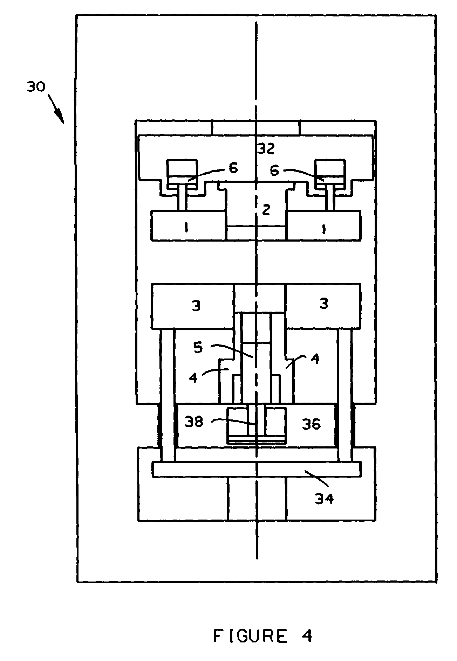

Figure 4 is a front elevational view of the press.

### Description of the Invention

Like parts shall be given like numbers throughout the invention.

A device 17 is utilized to compact parts 13 out of powder material with an undercut 15 in a press 30. The press 30 is well known to those persons skilled in the art and includes an upper ram 32, lower ram 34 and press table 36 which is fixed relative the frame of the press 30.

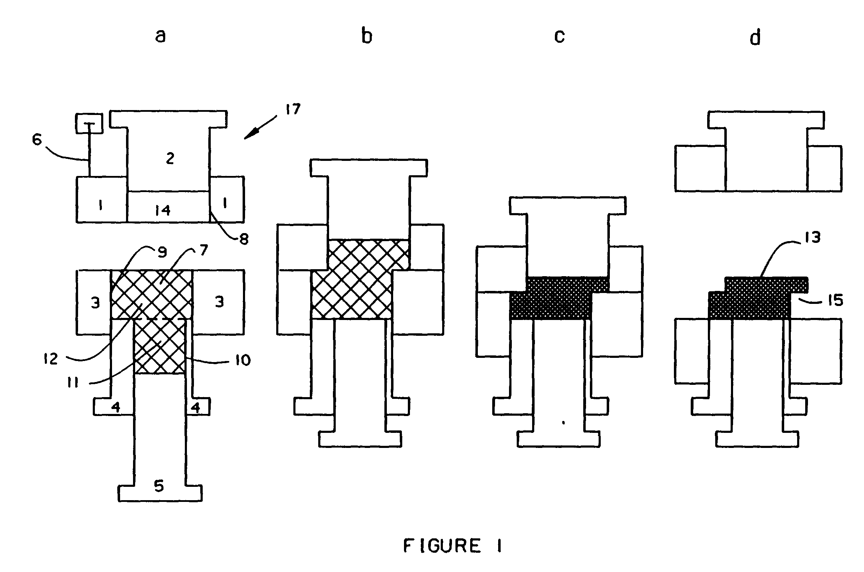

Figure 1 illustrates the device 17 which includes the top or upper die 1, at least one top or upper punch 2, a bottom or lower die 3, and at least two bottom or lower punches 4 and 5.

The top die 1 has a drive system 6 which may comprise a hydraulic cylinder mounted to the upper rain 32 of a press 30. Accordingly, the top die is moveable relative the upper ram by means of the device system 6. The top punch 2 is mounted on the upper rain 32 while the bottom die 3 is driven by the lower ram 34 of the press 30. Moreover, at least one of the bottom punches 5 has a drive system which may consist of a hydraulic cylinder 38 mounted stationary relative to the frame 36 of the press 30.

The upper punch 2 is associated with the upper die 1. In particular, the upper die 1 has a hole 8 for receiving upper punch 2 for slidable relative motion therebetween.

The lower punches 4 and 5 are mounted for relative slidable movement with the lower die 3. In particular, lower die 3 includes a hole 9 to receive punches 4 and 5 for relative slidable movement therebetween. Furthermore, the lower punch 4 includes a hole 10 for slidably receiving lower punch 5. The lower punch 5 moves relative the lower punch 4 between the lowest position shown in Figure 1a and the closed position shown in Figure 1b. The cavity 7 includes a volume 11 which is defined by the space created between the slidable relative movement of punch 5 relative punch 4 from the position shown in Figure 1b to that shown in Figure 1a.

The upper die 1 and lower die 3 are adapted for relative movement between an open position as illustrated in Figure 1a and a closed position as shown in Figure 1b. In the open position, a feed box (not shown) moves over the cavity 7. The cavity 7 is defined by the space between the lower die 3 and the lower punches 4 and 5 when the lower punch 4 is in its lowest position relative the lower die 3, and where the other lower punch 5 is in its lowest position relative the lower punch 4 as shown in Figure 1a. The lower punch 5 is moved far enough don or in its lowest position that enough powder 12 can be stored for the compaction of the part 13.

After filling of the cavity 7 the upper ram is moved down until the upper die 1 is touching the lower die 3 as shown in Figure 1b for sealing of the cavity 7. The lower die 3 and lower punch 4 have not moved between the positions shown in figure 1a and 1b.

Thereafter the moveable lower punch 5 travels upward so as to transfer the powder 12 from the volume 11 into the cavity 14 in the top die 1. The upper cavity 14 is defined by the upper die 1 and upper punch 2. The upper die 1 moves relative the upper punch 2 by means of the hydraulic cylinder 6 as best shown in figure 1d.

Figure 1b illustrates that the upper cavity 14 is offset from the lower cavity in a direction perpendicular to the movement of the upper die 1 relative the lower die 3 (in other words the compaction direction), so as to produce said part 13 with an undercut 15.

The compaction is shown in Figure 1c and is accomplished by moving the upper ram 32 and both dies 1 and 3 with a suitable speed relationship downward. After compaction the part is ejected by withdrawing the top die 1 upward and the lower die 3 downward as shown in figure 1d.

It is possible to also have a stationary bottom die if the bottom punches are mounted to the lower ram of the press and are used for counter pressing and ejection.

Figure 1d shows the ejection of the part 13 when the dies 1 and 3 are in an eject position. The part 13 has an undercut 15.

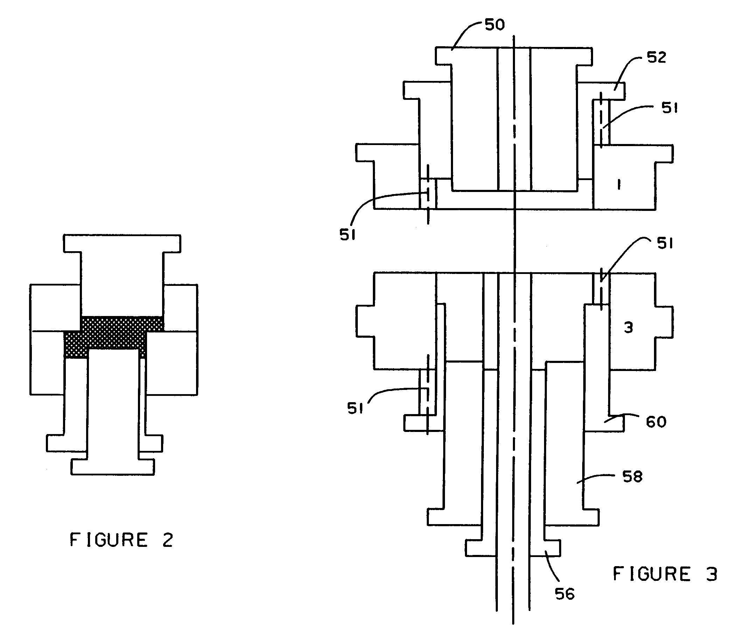

The embodiment illustrated in Figure 1 shows the compaction of a single level part 13 with an undercut 15. The invention is not limited thereto but can also be used for multi-level parts with an undercut by introducing necessary additional top and bottom punches. For example, Figure 2 illustrates a part 13 having multiple levels which is created by the each of punches 4 and 5 being at different levels. In such case the device and method shown herein is more advantageous since the bottom punch which transfers the powder into the top die can at the same time form one of the bottom levels of the part.

Figure 3 illustrates another embodiment of the invention having several upper punches 50 and 52. Upper punch 52 could be stationary and upper punch 50 could be moved by suitable hydraulic cylinders. Moveover, Figure 3 illustrates several lower punches 56, 58 and 60. Numeral 51 shows the pitch diameter of the tooth form within the punches and respective dies.

In order to conduct all necessary movements during the cycle with suitable precision and speeds and timing, a hydraulic press with closed loop controls is preferably used, although the invention is not limited thereto.

The drawings illustrate the withdrawal principal which means that after compaction the lower die is withdrawn to eject the part. However the invention described herein is also applicable for the counterpressing principle in which case the bottom die is stationary relative the press and all the bottom punches are mounted to the lower ram (including the drives to achieve relative movements between the bottom punches, if more than one bottom punch), so that after compaction the bottom punches will be moved further through the bottom die by the lower ram in order to eject the part.

Although the preferred embodiment as well as the operation and use have been specifically described in relation to the drawings, it should be understood that variations in the preferred embodiment could be achieved by a person skilled in the trade without departing from the scope of the invention as claimed herein.

## Claims

1. A toolset for compacting parts from powdered material comprising a pair of opposed die and punch sets each having a die (1,3) and a punch (2,5) co-operating therewith to define respective cavities (7,14), said sets being movable relative to one another from an open position in which said sets are separated, to a closed position in which said cavities are in closed communication to form a closed mold climber, one of said punches (5) being movable from a filling position, in which said respective cavity (7) has a volume (11) sufficient to receive a charge of powder (12) to fill said mold chamber, to a transfer position in which said respective cavity (7) has a reduced volume, movement of said punch (5) between said filling and said transfer positions thereby transferring powder (12) to the other of said cavities (14) to fill said closed mold chamber, said dies (1,3) and punches (2,5) of said pair of die and punch sets being further movable to a compaction position and an ejection position.

2. The toolset of claim 1 wherein at least one of said pair of die and punch sets has a plurality of punches (56,58,60) nested within a die (3); each of said plurality of punches (56,58,60) having an end for contacting the charge of powder and each of said ends being movable to contact said powder (12) material at different levels to produce a compacted part having different levels.

3. The toolset of claim 2 wherein the other of said pair of die and punch sets includes more than one punch (50,52), said one of said pair of die and punch sets includes more than two punches (56,58,60), and each of said punches are movable to respective spaced locations in said mold chamber to form a multi-level compacted part

4. The toolset of claim 1 wherein in each of said filling, transfer, compaction, and ejection positions each of said punches is in sliding engagement within said die with which it is co-operating.

5. The toolset of claim 1 wherein said die and punch sets an relatively movable along an axis of reciprocation, and one of said cavities (14) is displaced in a direction transverse to said axis relative to the other of said cavities (7).

6. The toolset of claim 1 or 5 wherein in said closed position a punch of at least one of said die and punch sets is movable relative to its die to a compaction position.

7. The toolset of claim 1 or 5 wherein on of said die and punch sets includes two punches (50,52), and a die (1), said die including a opening for slidably receiving said punches for relative movement.

8. The toolset of claim 1 or 7 wherein one of said punches of said first die and punch set is movable relative to the other punch and said die to transfer said powder.

9. The toolset of claim 1 or 7 wherein movement of said one punch from said filling position to said transfer position displaces a volume (11) of powder corresponding substantially to the volume of said cavity (14) associated with the other of said punch and die sets.

10. The toolset of claim 5 wherein each of said punches (2,5) of said punch and die sets has an end for contacting the charge of powder (12); and each of said ends is movable to spaced locations within said mold chamber to contact said powder material a a different locations, whereby a compacted part having a stepped surface is produced.

11. The toolset of claim 10 wherein each of said die and punch sets includes more than one punch, said punches (50,52) being movable to respective spaced locations within said mold chamber to form stepped surfaces for said part.

12. The toolset of claim 10 wherein said die and punch sets are movable from said transfer position to a compaction position and an ejection position, and, in each of said filling, transfer, compaction, and ejection positions each of said punches is slidably associated with respective ones of said dies.

13. A press for compacting parts out of powder material said press (30) having a frame, a pair of opposed rams (32,34) and a toolset operatively associated with said rams, said press comprising:
(a) a pair of die and punch sets movable relative to one another between an open position, a closed position and an ejection position:
(b) a drive for controlling relative movement between said punch and die sets;
(c) each of said punch and die sets including at least one punch (2,5) associated with a die (1,3) for relative movement therebetween:
(d) a drive member associated with each of said sets for controlling relative movement between respective ones of said die and said punch;
(e) said punch and die of one of said sets defining a cavity (7) for filling with said powder material when said die sets are in said open position;
(f) said drive member associated with said one set being in said closed post on to move said punch of said one set towards said die of the other of said sets so as to transfer said powder material toward die of said other set, said drive members being operable to cause relative movement of said punches to compact said powder material between said punches with said dies in said closed position so as to produce said compacted part; and
(g) said die sets being movable to said eject position for ejection of said compacted part.

14. The press of claim 13 wherein one of said punches of one of said sets is mounted to one of said rains (32), and wherein said drive member associated therewith comprises a hydraulic motor (6) operable between said one ram (32) and said die (1) of said one set for movement of said die relative said punch.

15. The press of claim 14 wherein said die (3) of said other of said sets is mounted to the other of said rams (34).

16. The press of claim 15 wherein said drive member associated with said other of said sets includes a hydraulic motor (38) operable between said frame and said punch of said other set. '

17. The press of claim 16 wherein said other punch and die set includes a pair of punches (4,5), one of which is connected to said hydraulic motor (5) and the other of which is connected to said frame (4).

18. A toolset or press according to any preceding claim wherein said compacted parts comprise an undercut.

19. A method for making compacted powder parts with a toolset including a pair of die and punch sets each having a die (1,13) and an associated pinch (2,5) engageable therewithin to define respective cavities (7,14), said method comprising the sequential steps of:
(a) establishing the tool set in a filled position in which said cavities are in closed communication with a charge of powder (12) therein;
(b) moving one of said punches relative to its die to transfer at least a portion of the charge of powder from one of said cavities (7) to the other of said cavities (14);
(c) compacting the charge of powder to form a part; and
(d) ejecting said part.

20. The method of claim 19 including the steps of:
(a) positioning said die and punch sets in an open position and locating one of said punches within its associated die to define a cavity (7) for receiving the charge of powder having a volume (11) corresponding to the volume of said charge of powder;
(b) filling said one of said respective cavities (7) with the charge of powder; and
(c) moving said die and punch sets together to establish said tool set in said filled position.

21. A method according to claim 20 wherein one of said die ad punch sets includes a pair of punches (4,5) and said method includes the step of moving one punch (5) relative to the other to transfer said charge.

22. A method according to claim 21 including the step of moving said die (3) of said one set relative to both said punches to compact said charge.

23. A method according to claim 21 including the step of positioning said punches (4,5) of said one set at relatively spaced locations in said chamber.

24. A method according to claim 20 wherein each of said punches is maintained in sliding association with respective ones of said dies from said open position to ejection of said part.

25. A method according to any of claims 19 to 24 wherein the compacted powder parts comprise an undercut.

## Patentansprüche

1. Werkzeugsatz zum Kompaktieren von Teilen aus pulverförmigem Material, enthaltend zwei sich gegenüberliegende Pressform- und Gesenksätze, wobei jeder dieser Sätze eine Pressform (1, 3) und ein zur Begrenzung der jeweiligen Hohlräume (7, 14) damit zusammenwirkendes Gesenk (2, 5) aufweist, wobei die Werkzeugsätze relativ zueinander aus einer geöffneten Stellung, in der die Werkzeugsätze getrennt sind, in eine geschlossene Stellung, in der die Hohlräume zur Ausbildung einer geschlossenen Gussformkammer in geschlossener Verbindung stehen, wobei eines der Gesenke (5) aus einer Einfüllstellung, in der der jeweilige Hohlraum (7) ein Volumen (11) aufweist, welches ausreicht, um zum Befüllen der Gussformkammer eine Pulverladung (12) aufzunehmen, in eine Transportstellung bewegt werden kann, in der der jeweilige Hohlraum (7) ein verringertes Volumen besitzt, wobei durch die Bewegung des Gesenks (5) zwischen der Einfüllstellung und der Transportstellung Pulver (12) in den anderen Hohlraum (14) transportiert wird, um die geschlossene Gussformkammer zu befüllen, wobei ferner die Pressformen (1, 3) und die Gesenke (2, 5) der beiden Pressform- und Gesenksätze weiter in eine Verdichtungestellung und eine Auswurfstellung bewegt werden können.

2. Werkzeugsatz nach Anspruch 1, wobei wenigstens einer der beiden Pressform- und Gesenksätze eine Vielzahl von in einer Pressform (3) verschachtelten Gesenken (56, 58, 60) aufweist, wobei jedes der Vielzahl von Gesenken (56, 58, 60) ein Ende zum Eingreifen in die Pulverladung besitzt und wobei jedes der Enden so bewegt werden kann, daß es zur Herstellung eines kompaktierten Teiles mit unterschiedlichen Ebenen in das pulverförmige Material (12) in verschiedenen Ebenen eingreift.

3. Werkzeugsatz nach Anspruch 2, wobei der andere der beiden Pressform- und Gesenksätze mehr als ein Gesenk (50, 52) aufweist, wobei ferner der eine der beiden Pressform- und Gesenksätze mehr als zwei Gesenke (56, 58, 60) enthält und wobei jedes der Gesenke in jeweils beabstandete Stellen in der Gussformkammer bewegt werden kann, um ein mehrflächiges, kompaktes Teil zu bilden.

4. Werkzeugsatz nach Anspruch 1, wobei in jeder Füll-, Transport-. Verdichtungs- und Auswurfposition jedes Gesenk in Gleitsingriff mit der Pressform steht, mit der es zusammenwirkt.

5. Werkzeugsatz nach Anspruch 1, wobei die Pressform- und Gesenksätze relativ entlang einer wechselseitigen Achse bewegt werden können und wobei einer der Hohlräume (14) in einer Richtung quer zu dieser Achse relativ zu dem anderen Hohlraum (7) versetzt angeordnet ist.

6. Werkzeugsatz nach Anspruch 1 oder 5, wobei in der geschlossenen Stellung ein Gesenk von wenigstens einem der Pressform- und Gesenksätze relativ zu seiner Pressform in eine Verdichtungsstellung bewegt werden kann.

7. Werkzeugsatz nach Anspruch 1 oder 5, wobei einer der Pressform- und Gesenksätze zwei Gesenke (50, 52) und eine Pressform (1) aufweist, wobei die Pressform eine Öffnung zur gleitbeweglichen Aufnahme der Gesenke für eine Relativbewegung enthält.

8. Werkzeugsatz nach Anspruch 1 oder 7, wobei eines der Gesenke des ersten Pressform- und Gesenksatzes relativ zu dem anderen Gesenk und der Pressform bewegt werden kann, um das Pulver zu transportieren.

9. Werkzeugsatz nach Anspruch 1 oder 7, wobei die Bewegung des einen Gesenke aus der Einfüllstellung in die Transportstellung ein Pulvervolumen (11) verdrängt, das im wesentlichen dem Volumen des Hohlraums (14) entspricht, der mit dem anderen Gesenk- und Pressformsatz verbunden ist.

10. Werkzeugsatz nach Anspruch 5, wobei jedes der Gesenke (2, 5) der Gesenk- und Pressformsätze ein Ende zum Eingreifen in die Pulverladung (12) aufweist und wobei jedes dieser Enden an beabstandete Stellen in der Gussformkammer bewegt werden kann, um an verschiedenen Stellen in das pulverförmige Material einzugreifen, wodurch ein kompaktes Teil mit einer abgestuften Oberfläche hergestellt wird.

11. Werkzeugsatz nach Anspruch 10, wobei jeder der Pressform- und Gesenksätze mehr als ein Gesenk aufweist, wobei die Gesenke (50, 52) in die jeweiligen beabstandeten Stellen in der Gussformkammer bewegt werden können, um an dem Teil abgestufte Oberflächen auszubilden.

12. Werkzeugsatz nach Anspruch 10, wobei die Pressform- und Gesenksätze aus der Transportstellung in eine Verdichtungs- und eine Auswurfstellung bewegt werden können, und wobei in jeder Füll-, Transport-, Verdichtungs- und Auswurfstellung jedes Gesenk in Gleitverbindung mit den jeweiligen Pressformen steht.

13. Presse zum verdichten von Teilen aus pulverförmigem Material, wobei die Presse (30) einen Rahmen, zwei gegenüberliegende Stössel (32, 34) und einen mit den Stösseln verbundenen Werkzeugsatz besitzt, enthaltend
a) zwei Pressform- und Gesenksätze, die relativ zueinander zwischen einer geöffneten Stellung, einer geschlossenen Stellung und einer Auswurfstellung bewegt werden können,
b) eine Antriebseinrichtung zum Steuern der Relativbewegung zwischen den Gesenk- und Pressformsätzen,
c) wobei jeder Gesenk- und Pressformsatz wenigstens ein Gesenk (2, 5) aufweist, das für eine Relativbewegung mit einer Pressform (1, 3) verbunden ist,
d) ein Antriebsteil, das zum Steuern der Relativbewegung zwischen der jeweiligen Pressform und dem jeweiligen Gesenk mit jedem der Sätze verbunden ist,
e) wobei das Gesenk und die Pressform jedes Satzes einen Hohlraum (7) zum Befüllen mit pulverförmigem Material begrenzt, wenn sich die Pressformsätze in geöffneter Stellung befinden,
f) wobei sich das mit dem einen Satz verbundene Antriebsteil in geschlossener Stellung befindet, um das Gesenk des einen Pressform- und Gesenksatzes zur Pressform des anderen Satzes hin zu bewegen, um auf diese weise das pulverförmige Material zur Pressform des anderen Satzes zu transportieren, wobei die Antriebsteile ferner so betätigt werden können, daß sieeine Relativbewegung de#+, um das pulverförmige Material zur Herstellung des kompakten Teiles zwischen den Gesenken zu verdichten, wobei sich die Pressformen in geschlossener Stellung befinden, und
g) wobei die Pressformsätze zum Auswerfen des kompakten Teiles in die Auswurfstellung bewegt werden können.

14. Presse nach Anspruch 13, wobei eines der Gesenke des einen Satzes an einem der Stössel (32) befestigt ist und wobei das damit verbundene Antriebsteil einen Hydraulikmotor (6) aufweist, der zwischen dem einen Stössel (32) und der Pressform (1) des einen Satzes für eine Bewegung der Pressform relativ zum Gesenk betrieben werden kann.

15. Presse nach Anspruch 14, wobei die Pressform (3) des anderen Satzes an dem anderen Stössel (34) befestigt ist.

16. Presse nach Anspruch 15, wobei das Antriebsteil, daß mit dem anderen Satz verbunden ist, einen Hydraulikmotor (38) besitzt, der zwischen dem Rahmen und dem Gesenk des anderen Satzes betätigt werden kann.

17. Presse nach Anspruch 16, wobei der andere Gesenk- und Pressformsatz zwei Gesenke (4, 5) besitzt, von denen eines mit dem Hydraulikmotor (5) und das andere mit dem Rahmen (4) verbunden ist.

18. Werkzeugsatz oder Presse gemäß den vorhergehenden Ansprüchen, wobei die kompaktierten Teile einen Hinterschnitt aufweisen.

19. Verfahren zur Herstellung von kompakten Pulverteilen mit einem Hinterschnitt mit einem Werkzeugsatz, der zwei Pressform- und Gesenksätze aufweist, wobei jeder Pressform- und Gesenksatz eine Pressform (1, 13) und ein damit verbundenes Gesenk (2,5) besitzt, das zur Begrenzung der jeweiligen Hohlräume (7, 14) darin eingreift, wobei das Verfahren die folgenden aufeinanderfolgenden Verfahrensschritte enthält:
a) Einrichten des Werkzeugsatzes in einer befüllten Stellung, in der die Hohlräume in geschlossener Verbindung mit einer darin befindlichen Pulverladung (12) stehen;
b) Bewegen des einen Gesenkes relativ zu seiner Pressform, um wenigstens einen Teil der Pulverladung aus dem einen Hohlraum (7) in den anderen Hohlraum (14) zu transportieren.
c) Verdichten der Pulverladung zur Ausbildung eines Teiles; und
d) Auswerfen des Teiles.

20. Verfahren nach Anspruch 19, enthaltend die folgenden Verfahrensschritte:
a) Positionieren der Pressform- und Gesenksätze in einer geöffneten Stellung und Anordnen einer der Gesenke innerhalb seiner mit ihm verbundenen Pressform zur Begrenzung eines Hohlraumes (7) zur Aufnahme der Pulverladung, der ein Volumen (11) aufweist, das dem Volumen der Pulverladung entspricht;
b) Befüllen des einen der jeweiligen Hohlräume (7) mit der Pulverladung, und
c) Zusammenführen der Pressform- und Gesenksätze zum Einrichten des Werkzeugsatzes in der befüllten Stellung.

21. Verfahren nach Anspruch 20, wobei einer der Pressform- und Gesenksätze zwei Ausschlageisen (4, 5) aufweist und wobei das Verfahren den Verfahrensschritt enthält, bei dem ein Gesenk (5) relativ zu dem anderen Gesenk bewegt wird, um die Ladung zu übertragen.

22. Verfahren nach Anspruch 21 enthaltend den Verfahrensschritt, bei dem die Pressform (3) des einen Satzes relativ zu den beiden Gesenken bewegt wird, um die Ladung zu verdichten.

23. Verfahren nach Anspruch 21, enthaltend den Verfahrensschritt, bei dem die Gesenke (4, 5) des einen Satzes an relativ beabstandeten Stellen in der Kammer angeordnet werden.

24. Verfahren nach Anspruch 20, wobei jedes der Gesenke in Gleitverbindung mit den jeweiligen Pressformen gehalten wird - von der geöffneten Stellung bis zum Auswerfen des Teiles.

25. Verfahren nach jedem der Ansprüche 19 bis 24, wobei die kompaktierten Pulverteile einen Hinterschnitt aufweisen.

## Revendications

1. Outillage pour compacter des pièces à partir d'une matière en poudre, comprenant deux groupes opposés de matrice et poinçon ayant chacun une matrice (1,3) et un poinçon (2,5) qui coopère avec la matrice pour définir des cavités respectives (7,14), lesdits groupes étant déplaçables l'un par rapport à l'autre d'une position ouverte, dans laquelle lesdits groupes sont séparés, à une position fermée dans laquelle lesdites cavités sont en communication fermée de manière à définir une chambre de moule fermée, un desdits poinçons (5) étant déplaçable d'une position de remplissage, dans laquelle ladite cavité respective (7) a un volume (11) suffisant pour recevoir une charge de poudre (12) permettant de remplir ladite chambre de moule, à une position de transfert dans laquelle ladite cavité respective (7) a un volume réduit, le mouvement dudit poinçon (5) entre lesdites positions de remplissage et de transfert transférant de la poudre (12) à l'autre desdites cavités (14) pour remplir ladite chambre de moule fermée, lesdites matrices (1,3) et lesdits poinçons (2,5) desdits deux groupes de matrice et de poinçon étant en outre déplaçables jusqu'à une position de compactage et une position d'éjection.

2. Outillage selon la revendication 1, dans lequel au moins un desdits deux groupes de matrice et poinçon comprend une pluralité de poinçons (56,58,60) emboîtés à l'intérieur d'une matrice (3), chacun de ladite pluralité de poinçons (56,58,60) ayant une extrémité qui vient en contact avec la charge de poudre, et chacune desdites extrémités étant déplaçable pour venir en contact avec ladite matière en poudre (12) à différents niveaux afin de produire une pièce compactée ayant différents niveaux.

3. Outillage selon la revendication 2, dans lequel l'autre desdits deux groupes de matrice et poinçon comprend plus d'un poinçon (50,52), ledit un desdits deux groupes de matrice et poinçon comprend plus de deux poinçons (56,58,60) et chacun desdits poinçons est déplaçables vers des positions espacées respectives dans ladite chambre de moule pour former une pièce compactée à niveaux multiples.

4. Outillage selon la revendication 1, dans lequel, dans chacune desdites positions de remplissage, de transfert, de compactage et d'éjection, chacun desdits poinçons est en contact glissant à l'intérieur de la dite matrice avec laquelle il coopère.

5. Outillage selon la revendication 1, dans lequel lesdits groupes de matrice et poinçon sont déplaçables l'un par rapport à l'autre le long d'un axe de mouvement alternatif, et une desdites cavités (14) est décalée dans une direction transversale audit axe par rapport à l'autre desdites cavités (7).

6. Outillage selon la revendication 1 ou 5, dans lequel, dans ladite position fermée, un poinçon d'au moins un desdits groupes de matrice et poinçon est déplaçable par rapport à sa matrice jusqu'à une position de compactage.

7. Outillage selon la revendication 1 ou 5, dans lequel un desdits groupes de matrice et poinçon comprend deux poinçons (50,52) et une matrice (1), ladite matrice comportant une ouverture pour recevoir de façon coulissante lesdits poinçons pour un mouvement relatif.

8. Outillage selon la revendication 1 ou 7, dans lequel un desdits poinçons dudit premier groupe de matrice et poinçon est déplaçable par rapport à l'autre poinçon et à ladite matrice pour transférer ladite poudre.

9. Outillage selon la revendication 1 ou 7, dans lequel le mouvement dudit un poinçon de ladite position de remplissage à ladite position de transfert déplace un volume (11) de poudre correspondant sensiblement au volume de ladite cavité (14) associée à l'autre desdits groupes de poinçon et matrice.

10. Outillage selon la revendication 5, dans lequel chacun desdits poinçons (2,5) desdits groupes de poinçon et matrice présente une extrémité venant en contact avec la charge de poudre (12), et chacune desdites extrémités est déplaçable jusqu'à des positions espacées à l'intérieur de ladite chambre de moule de manière à venir en contact avec la dite matière en poudre à une position différente des autres, de sorte qu'on obtient une pièce compactée ayant une surface en gradins.

11. Outillage selon la revendication 10, dans lequel chacun desdits groupes de matrice et poinçon comprend plus d'un poinçon, lesdits poinçons (50,52) étant déplaçables à des positions espacées respectives à l'intérieur de ladite chambre de moule pour former des surfaces en gradins de ladite pièce.

12. Outillage selon la revendication 10, dans lequel lesdits groupes de matrice et poinçon sont déplaçables de ladite position de transfert jusqu'à une position de compactage et une position d'éjection et, dans chacune desdites positions de remplissage, de transfert, de compactage et d'éjection, chacun desdits poinçons est associé de façon coulissante à une matrice respective desdites matrices.

13. Presse pour le compactage de pièces à partir d'une matière en poudre, ladite presse (30) comprenant un bâti, deux pistons opposés (32, 34) et un outillage fonctionnellement associé auxdits pistons, ladite presse comprenant :
(a) deux groupes de matrice et poinçon déplaçables l'un par rapport à l'autre entre une position ouverte, une position fermée et une position d'éjection;
(b) un entraînement pour la commande du mouvement relatif entre lesdits groupes à poinçon et matrice ;
(c) chacun desdits groupes de poinçon et matrice incluant au moins un poinçon (2,5) associé à une matrice (1,3) pour un mouvement relatif entre eux ;
(d) un élément d'entraînement associé à chacun desdits groupes pour commander le mouvement relatif entre une matrice et un poinçon respectifs de chaque groupe ;
(e) ledit poinçon et ladite matrice d'un des dits groupes définissant une cavité (7) pour remplissage avec ladite matière en poudre lorsque lesdits groupes de matrice sont dans ladite position ouverte ;
(f) ledit élément d'entraînement associé avec ledit un groupe étant dans ladite position fermée pour déplacer ledit poinçon dudit un groupe vers ladite matrice de l'autre desdits groupes de façon à transférer ladite matière en poudre vers la matrice dudit autre groupe, lesdits éléments d'entraînement étant actionnables de manière à engendrer un mouvement relatif desdits poinçons afin de compacter ladite matière en poudre entre lesdits poinçons,avec lesdites matrices dans ladite position fermée, de façon à produire ladite pièce compactée; et
(g) lesdits groupes de matrice étant déplaçables jusque à ladite position d'éjection, pour éjection de ladite pièce compactée.

14. Presse selon la revendication 13, dans laquelle un desdits poinçons d'un desdits groupes est monté sur un desdits pistons (32),et dans laquelle ledit élément d'entraînement associé à ce dernier comprend un moteur hydraulique (6) qui peut agir entre ledit un piston (32) et ladite matrice (1) dudit un groupe pour un mouvement de ladite matrice par rapport audit poinçon.

15. Presse selon la revendication 14, dans laquelle ladite matrice (3) dudit autre desdits groupes est montée sur l'autre desdits pistons (34).

16. Presse selon la revendication 15, dans laquelle ledit élément d'entraînement associé audit autre desdits groupes comprend un moteur hydraulique (38) qui peut agir entre ledit bâti et ledit poinçon dudit autre groupe.

17. Presse selon la revendication 16, dans laquelle ledit autre groupe de poinçon et de matrice comprend deux poinçons (4,5) dont l'un est connecte audit moteur hydraulique (5) et l'autre est connecté audit bâti (4).

18. Outillage ou presse selon l'une quelconque des revendications précédentes, dans lequel lesdites pièces compactées comprennent une contre-dépouille.

19. Procédé de fabrication de pièces en poudre compactée, au moyen d'outillage comprenant deux groupes de matrice et poinçon ayant une matrice (1,13) et un poinçon associé (2,5) qui peut s'engager dans la matrice pour définir des cavités respectives (7,14), ledit procédé comprenant les étapes successives de :
(a) établissement de l'outillage dans une position remplie dans laquelle lesdites cavités sont en communication fermée et contiennent une charge de poudre (12) ;
(b) déplacement d'un desdits poinçons par rapport à sa matrice pour transférer au moins une partie de la charge de poudre d'une desdites cavités (7) à l'autre des dites cavités (14) ;
(c) compactage de la charge de poudre pour former une pièce ; et
(d) éjection de ladite pièce.

20. Procédé selon la revendication 19, comprenant les étapes de :
(a) positionnement desdits groupes de matrice et poinçon dans une position ouverte et localisation d'un desdits poinçons à l'intérieur de sa matrice associée pour définir une cavité (7) de réception de la charge de poudre ayant un volume (11) qui correspond au volume de ladite charge de poudre ;
(b) remplissage de ladite une desdites cavités respectives (7) avec la charge de poudre ;
(c) rapprochement desdits groupes de matrice et poinçon pour établir ledit outillage dans ladite position remplie.

21. Procédé selon la revendication 20, dans lequel un desdits groupes de matrice et poinçon comprend deux poinçons (4,5) et ledit procédé comprend l'étape de déplacement d'un poinçon (5) par rapport à l'autre pour transférer ladite charge.

22. Procédé selon la revendication 21, incluant l'étape de déplacement de ladite matrice (3) dudit un groupe par rapport aux deux dits poinçons pour compacter ladite charge.

23. Procédé selon la revendication 22, incluant l'étape de positionnement desdits poinçons (4,5) dudit groupe à des positions relativement espacées dans ladite chambre.

24. Procédé selon la revendication 20, dans lequel chacun desdits poinçons est maintenu en association coulissante avec une matrice respective desdites matrices, de ladite position ouverte à ladite position d'éjection de ladite pièce.

25. Procédé selon l'une quelconque des revendications 19 à 24, dans lequel les pièces en poudre compactée comprennent une contre-dépouille.
